# EUROPÄISCHE PATENTSCHRIFT

(11) **EP 3 059 652 B1**
(45) Veröffentlichungstag und Bekanntmachung des Hinweises auf die Patenterteilung: **08.04.2020**
(21) Anmeldenummer: 16153829.3
(22) Anmeldetag: 02.02.2016
(51) Int. Cl.: G05D 23/19, F24D 19/10

(54) **STEUEREINRICHTUNG SOWIE ANLAGE ZUR RAUMTEMPERATURREGELUNG**
CONTROL DEVICE AND INSTALLATION FOR CONTROLLING THE TEMPERATURE OF A SPACE
DISPOSITIF DE COMMANDE ET INSTALLATION DE REGULATION DE TEMPERATURE AMBIANTE

(30) Priorität: 20.02.2015 DE 102015203131
(43) Veröffentlichungstag der Anmeldung: 24.08.2016
(73) Patentinhaber: Glen Dimplex Deutschland GmbH, 95326 Kulmbach (DE)
(72) Erfinder: BÄR, Tino, 96114 Hirschaid (DE); RAMMENSEE, Jens, 95030 Hof (DE)
(74) Vertreter: FDST Patentanwälte

(56) Entgegenhaltungen:
- EP-A2- 2 175 206
- DE-A1- 3 505 602

## Beschreibung

Die Erfindung betrifft eine Steuereinrichtung zur Raumtemperaturreglung eines Gebäudes mit mehreren Räumen mit den Merkmalen des Oberbegriffs des Anspruchs 1. Die Erfindung betrifft weiterhin eine Anlage mit einer solchen Steuereinrichtung.

Bei gegenwärtigen Heizungsanlagen ist üblicherweise eine außen- oder witterungsgeführte Regelung des Wärmeerzeugers und insbesondere die Festlegung einer Soll-Temperatur für das Wärmeträgermedium, insbesondere (Heiz-) Wasser üblich.

Vor dem Hintergrund der immer größer werdenden Wärmeschutzanforderungen an Wohngebäuden, der dadurch erhöhten Trägheit der Heizungssysteme und auch im Hinblick auf mögliche Energieeinsparungen ist jedoch eine derartige außen-/witterungsgeführte Regelung nicht optimal.

Zur Steigerung der Effizienz sind Raumtemperaturregelungen in Abhängigkeit eines definierten Referenzraumes bekannt. Der Referenzraum erfasst die Raumlufttemperatur. Der Regelung des Wärmeerzeugers steht mit dem Referenzraumregler datentechnisch in Kontakt. Die Regelung des Wärmeerzeugers ermittelt aus dem vorliegenden Werten des Referenzraumes, insbesondere durch Vergleich einer Raum-Solltemperatur mit einer Raum-Isttemperatur ggf. unter Berücksichtigung von weiteren Messparametern, wie beispielsweise die Außentemperatur, eine Solltemperatur des Vorlaufs und/oder des Rücklaufs eines Heizkreises. Anhand dieser über den Referenzraum ermittelten Solltemperatur im Vergleich mit der aktuellen Temperatur des Vor- und / oder Rücklaufs entscheidet dann die Regelung des Wärmerzeugers über eine Wärmeanforderungen an den Wärmeerzeuger, so dass der Wärmeerzeuger bei Bedarf gestartet wird. Bei dem Wärmeerzeuger kann es sich um unterschiedliche Wärmeerzeuger wie beispielsweise konventionelle Öl- oder Gaskessel, sonstige Verbrennungskessel oder auch um Wärmepumpen, etc. handeln.

Aus der EP 2 175 206 A2 ist ein Verfahren zur Temperierung von Räumen eines Gebäudes zu entnehmen, bei dem für mehrere Räume ein Soll-Istwertvergleich durchgeführt wird und der Raum mit der größten Temperaturdifferenz zwischen der Solltemperatur und der Isttemperatur als Referenzraum festgelegt wird. Stimmen Soll- und Istwert in einem Raum überein, so wird ein entsprechendes Stellventil geschlossen.

Ausgehend hiervon liegt der Erfindung die Aufgabe zugrunde, eine Effizienzverbesserung und damit eine Verringerung von Betriebskosten derartiger (Heizungs-) Anlagen zu erreichen.

Die Aufgabe wird gemäß der Erfindung gelöst durch eine Steuereinrichtung mit den Merkmalen des Anspruchs 1 sowie durch eine Anlage mit den Merkmalen des Anspruchs 14.

Die nachfolgend im Zusammenhang mit der Steuereinrichtung angeführten Vorteile und bevorzugten Ausgestaltungen sind sinngemäß auch auf die Heizungsanlage zu übertragen.

Die Steuereinrichtung dient allgemein zur Raumtemperaturregelung eines Gebäudes mit mehreren Räumen und umfasst hierzu eine zentrale Steuereinheit. Diese dient zur Ermittlung einer Solltemperatur, insbesondere eines Heizmediums und speziell der Rücklauf-Solltemperatur eines Heizkreises für einen zentralen Wärmeerzeuger. Diese Solltemperatur wird dabei aufgrund einer Soll-Ist-Abweichung einer Raumtemperatur eines Referenzraumes ermittelt. Zweckdienlicher Weise erfolgt anhand dieser ermittelten Solltemperatur auch eine Vorgabe bzw. Regelung des Wärmeerzeugers, so dass die Solltemperatur erreicht und gehalten wird.

Weiterhin umfasst die Steuereinrichtung mehrere Raumsensoren, über die in einem jeweiligen Raum zumindest die jeweilige Raumtemperatur erfasst wird. Die Raumsensoren stehen dabei mit der zentralen Steuereinheit datentechnisch in Verbindung. Die einzelnen Raumsensoren sind vorzugsweise als individuelle Raumtemperaturregler ausgebildet.

Für einen möglichst effizienten Betrieb ist die Steuereinheit für eine Ansteuerung von raumindividuellen Stellventilen für raumindividuelle Heizkreise ausgebildet. Zur Ausbildung der raumindividuellen Heizkreise sind einzelne Heizstränge, die zu einem jeweiligen raumseitigen Verbraucher führen, über entsprechende Heizkreis-Stellventile steuerbar. Bei den Stellventilen handelt es sich um motorisch einstellbare Stellventile, so dass also die Durchflussmenge und damit die dem jeweiligen Raum zur Verfügung gestellte Wärme steuerbar ist. Diese raumindividuellen Stellventile für einen jeweiligen raumindividuellen Heizkreis werden daher insbesondere von der Regeleinrichtung des Wärmeerzeugers angesteuert. Bei den Stellventilen handelt es sich insbesondere um steuerbare Thermostatventile.

Die Steuereinheit ist derart ausgebildet, dass in Abhängigkeit von aktuellen Soll-Ist-Abweichungen verschiedener Räume die raumindividuellen Stellventile derart angesteuert werden, dass Wärme aus - beispielsweise aufgrund eines solaren Wärmeeintrags - überhitzten Räumen in kühlere Räume transportiert wird.

Insbesondere wird hierbei das Stellventil in einem überhitzten Raum, bei dem also die Raumtemperatur größer ist als die Raum-Solltemperatur, geöffnet, so dass Wärme von dem Heizkreis aufgenommen und in kühlere Räume transportiert wird, bei denen die Raum-Solltemperatur nicht erreicht ist,. Eine Umwälzpumpe in dem Heizkreis sorgt hierbei für einen notwendigen Transport für das Wärmeträger- oder Heizmedium zwischen den Räumen.

Diese Maßnahme ist insbesondere an z.B. sonnigen (Winter-) Tagen von besonderem Vorteil, wenn südlich ausgerichtete Räume überhitzen und gleichzeitig z.B. nördlich ausgerichtete Räume einen Wärmebedarf haben.

Für diesen Wärmetransfer zwischen verschiedenen Räumen wird insbesondere ein verbraucherseitiger Teil des Heizkreises von einem erzeugerseitigen Teil des Heizkreises getrennt. Es erfolgt also eine Zirkulation des Wärmeträgermediums lediglich zwischen den einzelnen Verbrauchern, also zwischen den einzelnen Räumen. Hierdurch wird der Wärmetransport vom überhitzten in den kühleren Raum ohne Einbindung des Wärmeerzeugers ermöglicht.

In bevorzugter Weiterbildung besteht nicht nur ein definierter Referenzraum, sondern es wird individuell in Abhängigkeit der jeweils herrschenden Bedingungen aus den unterschiedlichen Räumen ein Referenzraum bestimmt und anhand dessen Raumtemperatur dann die erforderliche Solltemperatur ermittelt.

Zur Ermittlung des aktuell gültigen Referenzraumes ist die Steuereinheit weiterhin derart eingerichtet, dass für jeden der Räume eine aktuelle raumindividuelle Soll-Ist-Abweichung der Raumtemperatur ermittelt wird und die einzelnen Soll-Ist-Abweichungen miteinander verglichen werden. In Abhängigkeit dieses Vergleichsergebnis wird dann einer der Räume als aktueller Referenzraum festgelegt. Hierbei handelt es sich nur um eine temporäre, vorübergehende Festlegung in Abhängigkeit der aktuellen Raumtemperaturen. Anhand des aktuellen Referenzraums wird dann die Solltemperatur, insbesondere die Rücklauf-Soll-Temperatur ermittelt. Bei dieser handelt es sich insbesondere um die maximal erforderliche (Rücklauf-) Soll-Temperatur.

Durch diese Maßnahme kann unterschiedlichen Bedingungen und Einflüssen besser Rechnung getragen werden, als mit einem statischen Referenzraum. So können beispielsweise unterschiedliche Aufheizwerte, beispielsweise auch Sonneinstrahlungen etc. zu unterschiedlichen Anforderungen bezüglich der Rücklaufsolltemperatur führen. Durch die hier vorgeschlagene "Dynamisierung" der Festlegung des Referenzraums ist somit eine verbesserte Anpassung an die tatsächlich herrschenden Verhältnisse und damit ein verbesserter Komfort sowie eine erhöhte Effizienz ermöglicht.

Bei dem zentralen Wärmeerzeuger handelt es sich insbesondere um eine Niedertemperatur-Heizung, insbesondere eine Wärmepumpenanlage.

Zweckdienlicher Weise wird hierbei der Raum mit der größten aktuellen Soll-Ist-Abweichung als aktueller Referenzraum festgelegt. Dadurch wird gewährleistet, dass für jeden Raum ausreichend Wärme zur Verfügung gestellt werden kann. Im Falle eines Heizbetriebes zum Heizen der Räume ist die Abweichung positiv und im Falle eines Kühlbetriebes zum Kühlen der Räume ist die Abweichung negativ.

Die Bestimmung des Referenzraums erfolgt hierbei zweckdienlicher Weise in wiederkehrenden Zeitabständen. Die Steuereinheit fragt daher in insbesondere vorbestimmten Intervallen die aktuellen Raumtemperaturen, insbesondere auch die eingestellten Raum-Soll-Werte ab. Die Intervalle liegen dabei vorzugsweise zumindest im Bereich von wenigen Minuten oder auch darunter.

Zur Erfassung der Raumtemperatur ist üblicherweise in jedem Raum ein Raumtemperaturregler vorgesehen, welcher zum einen die aktuelle Ist-Temperatur erfasst und über den sich zudem auch eine gewünschte Soll-Temperatur beispielsweise durch ein manuell verstellbares Bedienelement oder auch durch eine Remote-Steuerung wie beispielsweise eine Bedienapp einstellen lässt.

Zweckdienlicherweise wird neben der Raumtemperatur ergänzend als ein Raummesswert auch die herrschende Raumfeuchte herangezogen. Dies ist insbesondere im Falle eines Kühlbetriebs und damit bei Systemen mit Kühleinrichtungen, insbesondere Flächenkühlsystemen, von besonderer Bedeutung.

Als Flächenkühlsysteme werden gemäß einer ersten Ausführungsvariante dabei passive Flächenkühlsysteme eingesetzt, die beispielsweise lediglich mit kühlem Wasser gespeist werden, welches beispielsweise zum Abkühlen durch den Boden geleitet wird. Alternativ kann es sich auch um aktive Kühlsysteme handeln, bei denen das Wärmeträgermedium aktiv gekühlt wird. Hierzu wird vorzugsweise eine im Umkehrbetrieb eingesetzte Wärmepumpenanlage verwendet. Bei einer Heizanforderungen stellt diese vorzugsweise Wärme und bei einer Kühlanforderungen Kälte zur Verfügung durch Umschalten ihres Betriebs.

Durch die Ermittlung der Raumfeuchte wird vorzugsweise eine aktuelle Taupunkttemperatur für den jeweiligen Raum ermittelt, unterhalb derer also die Feuchte kondensieren würde.

Um dies zu vermeiden ist in bevorzugter Ausgestaltung im Kühlbetrieb vorgesehen, dass für jeden Raum raumindividuell die aktuelle Taupunkttemperatur ermittelt wird, speziell anhand der gemessenen Raumfeuchte und der gemessenen Raumtemperatur, und dass weiterhin der Raum mit der höchsten Taupunkttemperatur als aktueller Referenzraum festgelegt wird.

Für die uni- oder bidirektionale Datenübermittlung stehen die Raumsensoren, insbesondere die Raumtemperaturregler während des Betriebs mit der Steuereinheit vorzugsweise über einen Datenbus entweder kabelgebunden oder funkbasiert in Verbindung.

Ergänzend ist weiterhin in zweckdienlicher Ausgestaltung ein Remote-Zugriff auf die Steuereinrichtung insbesondere auf die Steuereinheit ermöglicht, um benutzerindividuelle Einstellungsbedienvorgänge vorzunehmen. Bei dieser Remote-Steuerung handelt es sich insbesondere um eine Bedienapp, die über das Mobilfunknetz beispielweise von einem Smartphone aus auf die Steuereinheit oder weitere Elemente der Steuereinrichtung zugreift.

Insbesondere ist die Steuereinrichtung dabei Teil eines sog. Home-Energy-Systems und / oder in ein Smart Grid System eingebunden. Beide Systeme dienen dazu, verschiedene Energiequellen intelligent miteinander zu verknüpfen um somit eine möglichst effiziente Ausnutzung der Energiequellen zu erreichen. Insbesondere ist dies bei regenerativen Energiequellen wie Sonne, Wind oder Wasser von besonderem Vorteil, da diese Energiequellen natürlichen Schwankungen unterworfen sind.

Im Falle des Home-Energy-Systems werden dabei unterschiedliche Energiequellen der mit der Heizungsanlage zu versorgenden Einheit, insbesondere Wohneinheit, insbesondere ein Ein- oder Mehrfamilienhaus, intelligent miteinander verbunden, so dass die einzelnen Energiequellen bedarfsgerecht und in Abhängigkeit der zur Verfügung stehenden Ressourcen eingebunden werden. Bei den Energiequellen handelt es sich insbesondere um regenerative Energiequellen, wie solar erzeugte Wärme oder zur Verfügung stehender Solarstrom einer Photovoltaikanlage.

Im Falle der (ergänzenden) Einbindung der Steuereinrichtung in ein "Smart Grid" ist die mit der Heizungsanlage zu versorgende Einheit in ein Versorgungsnetz eines zumindest regionalen Energieversorgers eingebunden. In diesem Fall gleicht die Steuereinrichtung beispielsweise elektrische Leistungsanforderungen mit dem Energieversorger ab, um beispielsweise bei geringer Verbrauchslast im Netz des Energieversorgers Strom zu entnehmen. Mit diesem kann beispielsweise die Wärmepumpe aktiviert und die erzeugte Wärme in einem Wärmespeicher, beispielsweise ein Pufferspeicher oder ein Latentwärmespeicher zwischengespeichert werden.

In besonders bevorzugter Ausgestaltung wird die Gebäudemasse als Energiespeicher insbesondere für Energie aus dem Versorgernetz oder für lokal von der (Wohn-) Einheit erzeugte Energie herangezogen. Hierdurch kann überschüssige Energie, insbesondere regenerativ erzeugte (elektrische) Energie in Wärme umgewandelt und gespeichert werden. Hierzu wird durch die Steuereinheit bei Bedarf die Solltemperatur, insbesondere die Raum-Solltemperaturen der Räume automatisch angehoben, also über den beispielsweise manuell eingestellten Wert. Hierdurch werden die Räume stärker erwärmt und das Gebäude dient als Wärmespeicher. Die Steuereinrichtung kann die Anhebung der Solltemperatur von weiteren Kriterien wie Tageszeit abhängig machen. So ist beispielsweise eine proaktive Erwärmung der Räume bei sonnigen Wintertagen von Vorteil, um nach Sonnenuntergang und der entsprechenden Abkühlung bereits Wärme gepuffert zu haben. Solarenergie kann auf diese Weise effizient ausgenutzt werden. Dies gilt sowohl für das Home-Energy-System zur Ausnutzung z.B. von Photovoltaik-Energie als auch für die Einbindung in ein Smart-Grid-System, da hierdurch das Versorgungsnetz besser ausgelastet werden kann. Ergänzend ist dabei vorzugsweise vorgesehen, dass jeweilige insbesondere raumindividuelle Stellventile, über die die Wärmeabgabe über Heizelemente gesteuert wird, entsprechend geöffnet werden.

In bevorzugter Weiterbildung ist die Steuereinheit dabei unmittelbar in eine Regeleinrichtung des Wärmeerzeugers integriert. Die Steuerung der einzelnen Räume erfolgt daher direkt über die Regeleinrichtung des Wärmeerzeugers.

Zum Ausgleich unterschiedlicher Volumenströme zwischen dem verbraucherseitigen Teil und dem erzeugerseitigen Teil wird in zweckdienlicher Weise ein geeigneter Verteiler, beispielsweise ein sog. doppeltdifferenzdruckloser Verteiler eingesetzt.

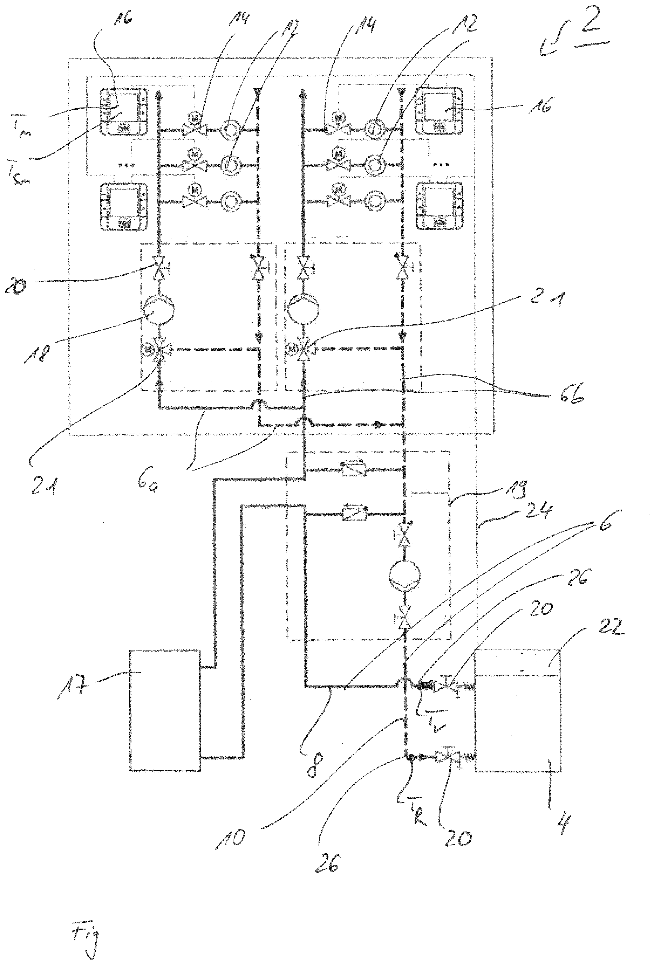

Ein Ausführungsbeispiel der Erfindung wird nachfolgend anhand der einzigen Figur näher erläutert. Diese zeigt in einer vereinfachten Darstellung ein Schaltbild einer Heizungsanlage.

Die Heizungsanlage 2 umfasst einen Wärmeerzeuger 4, welcher im Ausführungsbeispiel einen Heizkreis 6 mit einem Wärmeträgermedium, hier Wasser, speist. Bei dem Wärmeerzeuger 4 handelt es sich insbesondere um eine Wärmepumpe. Der Heizkreis 6 umfasst einen Vorlauf 8 sowie einen Rücklauf 10 und versorgt mehrere Verbraucher 12. Bei diesen handelt es sich insbesondere um Flächenheizsysteme wie beispielsweise Fußbodenheizung, Wandheizung oder Decken-heizung. Die einzelnen Verbraucher 12 sind dabei jeweils zur Beheizung eines Raumes oder Raumbereichs ausgebildet. Im Ausführungsbeispiel ist jeder Verbraucher 12 über ein motorisch angesteuertes Stellventil 14 ansteuerbar. Über das Stellventil 14 ist daher jeweils ein separierter Teil-Heizkreis, auch als raumindividueller Heizkreis bezeichnet, ausgebildet.

Jedem Raum oder Raumbereich ist weiterhin ein als Temperaturregler 16 ausgebildeter Raumsensor zugeordnet. Über diesen ist eine Soll-Temperatur vorgebbar. Gleichzeitig weist der Temperaturregler 16 einen integrierten Temperatursensor zur Messung der Ist-Temperatur im jeweiligen Raum auf.

Im Ausführungsbeispiel ist ein Wärmespeicher, insbesondere ein Pufferspeicher 17 zur Zwischenspeicherung der von dem Wärmeerzeuger 4 erzeugten Wärme vorgesehen. Dieser ist hydraulisch in den Heizkreis 6 eingebunden.

Der vom Wärmeerzeuger 4 abgehende Heizkreis 6 teilt sich im Ausführungsbeispiel in zwei Teilkreise 6a, 6b auf, wobei in jedem Teilkreis 6a, 6b im Ausführungsbeispiel mehrere, beispielsweise drei Verbraucher 12 integriert sind. Die beiden Teilkreise 6a, 6b dienen dabei insbesondere zur Versorgung einer Teileinheit der mit dem Wärmeerzeuger 4 zu versorgenden Gesamteinheit. Bei den Teileinheiten handelt es sich beispielsweise um separate Wohneinheiten eines gemeinsamen Gebäudes, beispielsweise die beiden Hälften eines Doppelhauses. In jedem Teilkreis 6a, 6b ist eine Umwälzpumpe 18 angeordnet. Der jeweiligen Umwälzpumpe 18 vor- sowie nachgeschaltet ist im Ausführungsbeispiel weiterhin ein Ventil 20. Weitere Ventile 20 sind in den Rücklauf 10 sowie unmittelbar im Bereich des Wärmeerzeugers 4 geschaltet.

Die einzelnen Teilkreise 6a, 6b weisen weiterhin Mischventile 21 auf, über die eine hydraulische Verbindung zwischen Vorlauf 8 und Rücklauf 10 in diesen Teilkreisen 6a, 6b und damit die Einstellung von unterschiedlichen Mischtemperaturen für die Teilkreise 6a, 6b ermöglicht ist.

Weiterhin ist zwischen der Verbraucherseite und dem Wärmeerzeuger 4 ein Verteiler, insbesondere ein sogenannter doppelt differenzdruckloser Verteiler 19 (DDV), in den Heizkreis 6 hydraulisch eingebunden.

Der Betrieb der Heizungsanlage 2 wird mit Hilfe einer Steuereinrichtung vorgenommen. Diese Steuereinrichtung umfasst eine Steuereinheit 22, welche vorzugsweise in eine Regeleinrichtung des Wärmeerzeugers 4 integriert ist. Alternativ ist sie an einer anderen Stelle angeordnet. Diese Steuereinheit 22 steht über einen Datenbus 24 mit den Temperaturreglern 16 in Verbindung. Zumindest der Datenbus 24 sowie die Temperaturregler 16 sind daher weitere Bestandteile der Steuereinrichtung.

Vorzugsweise unmittelbar im Bereich des Wärmeerzeugers 4 sind weiterhin Temperatursensoren 26 in den Vorlauf 8 sowie in den Rücklauf 10 geschaltet, um die Vorlauftemperatur Tᵥ sowie die Rücklauftemperatur T_{R} zu messen.

Die gesamte Steuerung der Heizungsanlage sowie insbesondere auch der raumindividuellen Stellventile 14 erfolgt über die zentrale, in die Regeleinrichtung des Wärmeerzeugers 4 integrierte Steuereinheit 22.

Diese empfängt von den einzelnen Temperaturregeln 16 über den Datenbus 24 die jeweils gemessene Raumtemperatur Tₙ, wobei n ein Laufindex für den jeweiligen Raum ist. Gleichzeitig wird von einem jeweiligen Temperaturregler 16 auch die an den jeweiligen Temperaturregler 16 eingestellte Soll-Temperatur T_{Sn} übermittelt.

So erhält beispielsweise für einen Raum 1 die Steuereinheit 22 eine Soll-Temperatur T_{S1} von 20 °C und eine Ist- Raumtemperatur T₁ von 22 °C. Der Raum 1 ist also in diesem Fall überhitzt, die aktuelle Ist-Raumtemperatur übersteigt die Soll-Temperatur.

Für einen Raum 2 beträgt die Soll-Temperatur T_{S2} beispielsweise 22° C und die Ist-Raumtemperatur T₂ 19° C. Schließlich beträgt für einen dritten Raum 3 die Soll-Temperatur T_{S3} 18° C und die Ist-Raumtemperatur T₃ 17° C.

Anhand dieser raumindividuellen mitgeteilten Temperaturen erstellt die Steuereinheit 22 für jeden Raum einen Soll-Ist-Vergleich und ermittelt aus diesen verschiedenen Vergleichen den Raum mit der größten positiven Abweichung der Soll-Temperatur T_{Sn} von der dort herrschenden Ist-Raumtemperatur Tₙ. Im obigen Beispiel ist dies Raum 2, da hier der Unterschied 3° K beträgt. Dieser Raum 2 wird nunmehr als der aktuelle Referenzraum herangezogen und hieraus eine aktuelle für den Heizkreis 6 gültige Soll-Temperatur vorgegeben. Im Ausführungsbeispiel wird eine Rücklaufsolltemperatur vorgegeben Die Temperatur T_{R} des Rücklaufs wird also in Abhängigkeit des Soll-Ist-Vergleichs des Referenzraums mit Hilfe der Regeleinrichtung des Wärmeerzeugers 4 eingestellt. Im Hinblick auf einen möglichst hohen Komfort und eine möglichst hohe Effizienz werden von der Steuereinheit 22 in regelmäßigen Abfrageintervallen beispielsweise im Bereich von wenigen Minuten oder auch weniger, die Temperaturwerte der einzelnen Temperaturregler 16 abgefragt und der Soll-Ist-Vergleich durchgeführt. Sofern nach der Auswertung der Soll-Ist-Temperaturen ein anderer Raum eine größte positive Abweichung der Soll-Temperatur T_{Sn} von der aktuellen Ist-Raumtemperatur Tₙ zeigt, so wird dieser weitere Raum nunmehr als Referenzraum und damit als Steuergröße für die Regelung herangezogen.

Für die Regelung der Solltemperatur (für den Rücklauf 10) wird allgemein derart vorgegangen, dass in einem Heizbetrieb bei einer positiven Soll-Ist-Abweichung die Solltemperatur erhöht und bei einer negativen Abweichung erniedrigt wird. Ist weiterhin die Rücklauf-Solltemperatur größer als die Rücklauf-Isttemperatur, so wird der Wärmeerzeuger ausgeschaltet bzw. im umgekehrten Fall zugeschaltet.

Die errechnete Solltemperatur gilt also allgemein als Vorgabe für den Wärmeerzeuger 4. Je nach aktuellem Zustand beispielsweise des Pufferspeichers 17 etc. kann diese errechnete Solltemperatur zu einer Anforderung des Wärmeerzeugers führen, so dass dieser zuschaltet. Über die Zuschaltung entscheidet die übliche Regelungslogik des Wärmeerzeugers 4, die in der Regeleinrichtung desselben enthalten ist.

In bevorzugter Ausbildung ist in der Steuereinheit 22 weiterhin eine Schnellheizfunktion hinterlegt, die bedarfsweise vom Nutzer beispielsweise über ein Bedienelement aktivierbar ist. Hierbei wird für einen begrenzten Zeitraum die Solltemperatur des Heizkreises auf die maximale Solltemperatur eingestellt, um ein möglichst schnelles Aufheizen zum Beispiel bei einem sogenannten Kaltstart zu erreichen.

Der besondere Vorteil der hier dargestellten dynamischen Zuweisung des Referenzraums liegt darin, dass eine genauere Berücksichtigung der aktuell herrschenden Verhältnisse in den einzelnen Räumen erfolgt.

Weiterhin wird eine Überhitzung von Räumen möglichst vermieden, so dass insgesamt ein effizienter Energieeinsatz erreicht ist. Insbesondere werden alle internen sowie externen Wärmeeinträge berücksichtigt. So führen beispielsweise Sonneneinstrahlungen auf der Südseite zu einer deutlichen Temperaturanhebung, wohingegen auf der Nordseite ein Wärmebedarf besteht.

Insbesondere in einem solchem Fall eines beispielsweise solar überhitzten Raumes ist ein Wärmetransport der Wärme von einem überhitzten Raum in einen kühleren Raum vorgesehen. Dies erfolgt insbesondere mit Hilfe des Verteilers 19 und/oder der Mischventile 18. Hierbei wird quasi der erzeugerseitige Teil des Heizkreises 6 von einem verbraucherseitigen Teil des Heizkreises 6 zumindest teilweise getrennt. Durch die fortwährende Umwälzung in den Teilkreisen 6a, 6b erfolgt dann ein Wärmetransport zwischen den verschiedenen Verbrauchern 12. All dies ermittelt die Steuereinheit 22 anhand der ihr übermittelten Messwerte. Dadurch wird eine effiziente Wärmeausnutzung erzielt.

Um diesen Wärmetransport zu ermöglichen gibt die Steuereinheit 22 den einzelnen Stellventilen 14 und / oder Mischventilen 21 entsprechende Befehle zum Öffnen und/oder zum Schließen und zwar insbesondere in Abhängigkeit der berechneten Rücklaufsolltemperatur sowie der Abweichung zwischen der Soll-Temperatur T_{Sn} sowie der Ist-Temperatur Tₙ der einzelnen Räume

Grundsätzlich ist daher auch vorgesehen, dass mit Hilfe der einzelnen Stellventile, die üblicherweise in einem Heizkreisverteiler integriert sind, die Verteilung der Wärmeenergie auf die einzelnen Räume in Eigenregie erfolgt, also Insbesondere für den Fall, dass vom Wärmeerzeuger keine Heizwärme zur Verfügung gestellt wird. Insgesamt ist durch diese Maßnahme ein Wärmetransport von einem Raum in einen anderen Raum ermöglicht, ohne dass seitens des Wärmeerzeugers 4 Wärme zur Verfügung gestellt werden muss, also Energie verbraucht wird.

Die Kommunikation zwischen den einzelnen Komponenten erfolgt wie bereits erwähnt uni- oder bidirektional über den Datenbus 24, welcher drahtgebunden oder auch drahtlos, beispielsweise über eine Funktechnologie erfolgen kann. Die einzelnen Einheiten kommunizieren dabei anhand eines speziellen Kommunikationsprotokolls beispielsweise das Protokoll "Mod BUS". Als Master des Bussystems fungiert dabei die Steuereinheit 22, die also neben der Regelung des Wärmeerzeugers auch die Regelung des gesamten Wärmeverteilsystems mit den dazu gehörigen Temperaturreglern 16 übernimmt.

Insgesamt wird durch den hier beschrieben Aufbau eine sehr hohe Effizienz bei sehr hohem Komfort erzielt. Die hohe Effizienz wird insbesondere durch eine Vermeidung einer Überhitzung von Räumen erreicht. Der Aufbau zeichnet sich durch eine Raumtemperatur geführte Regelung mit Zugriff der Regeleinrichtung des Wärmeerzeugers 4 auf die Referenzräume zur Erfassung aller Referenztemperaturen aus. Weiterhin werden die einzelnen Stellventile 14 über die Regeleinrichtung des Wärmeerzeugers angesteuert.

Die gesamte Heizungsanlage 2 ist in gleicher Weise auch zur Raumkühlung einsetzbar. In diesem Fall sind in einem jeweiligen Raum zusätzliche Kühlverbraucher verschaltet, oder die eingesetzten Verbraucher lassen sich auch als Kühlelemente einsetzen. Bei den Kühlsystemen werden hierbei vorzugsweise ebenfalls Flächenkühlsysteme eingesetzt. Hierbei werden beispielsweise die bereits erwähnten Wand-, Fußbodenheizung oder auch Deckensysteme eingesetzt. Diese zeichnen sich allgemein dadurch aus, dass in ihnen ein Wärmeträgermedium, insbesondere Wasser, mit einem geeignet niedrigen Temperaturniveau geführt werden.

Sofern vorliegend also von Verbrauchern 12 gesprochen wird, so handelt es sich allgemein um Klimatisierungselemente zur Abgabe und/oder Aufnahme von Wärme. Die Heizungsanlage 2 kann allgemein als Anlage zur Klimatisierung, insbesondere Kühlen und Heizen von Räumen bezeichnet werden. Bei dem Wärmeerzeuger 4 handelt es sich daher allgemein um einen Erzeuger, der das im Kreislauf geführte Wärmeträgermedium (insb. Wasser) geeignet temperiert.

Insbesondere bei einer Ausgestaltung mit Kühlsystemen übermittelt der jeweilige Temperaturregler 16 neben den Temperaturwerten auch Feuchtigkeitswerte des jeweiligen Raumes, um im Kühlbetrieb eine Unterschreitung der Taupunkttemperatur und damit die Entstehung von Kondensat zu vermeiden.

Zur Festlegung der (Kühlwasser-) Soll-Temperatur wird derjenige Raum mit der höchsten ermittelten Taupunkttemperatur zum Referenzraum. Wird die Soll-Raumtemperatur des Referenzraumes während der Kühlung erreicht, wird dieser Raum nicht mehr weiter gekühlt und vorzugsweise aus der nächsten zeitlich folgenden Ermittlung der Taupunkttemperatur herausgenommen. Damit können die verbleibenden Räume eines Gebäudes gegebenenfalls eine niedrigere Taupunkttemperatur zur Festlegung der Kühlwasser Soll-Temperatur erhalten. Auch im Kühlbetrieb erfolgt also eine vergleichbare Vorgehensweise wie bei der Regelung beim Heizbetrieb über den Soll-Ist-Vergleich zwischen der eingestellten Soll-Temperatur und der aktuell gemessenen Ist-Temperatur.

Schließlich ist gemäß einem weiteren besonderen Aspekt vorgesehen, das Gebäude, in dem sich die einzelnen Räume befinden, als Speicher für Wärme heranzuziehen. Hierzu sind die Steuereinrichtung und die Steuereinheit 22 in ein Home-Energy-System oder auch ein Smart-Grid-System eingebunden. Falls in diesen Systemen überschüssige, insbesondere regenerativ erzeugte Energie zur Verfügung steht, so wird diese vorzugsweise elektrische Energie in Wärme umgewandelt und gespeichert. Hierzu ist insbesondere eine spezielle Ansteuerung der üblicherweise als Thermostatventile ausgebildeten Stellventile 14 vorgesehen.

Stand der Technik ist, dass die Thermostatventile in einem Raum schließen, wenn die Soll-Temperatur gleich der Ist-Temperatur des Raumes ist. Bei einem Überangebot an regenerativen Energien kann der Raum nicht als Speichermasse verwendet werden, da die Thermostatventile geschlossen sind. Um zusätzlich erzeugte Wärme aus regenerativen Energien über das Heizsystem in die Gebäudemasse zu bringen, wird nunmehr in bevorzugter Ausgestaltung die Raum-Solltemperatur durch die Steuereinrichtung angehoben. Dies hat zur Folge, dass die raumindividuellen Stellventile 14 eines Heizkreisverteilers geöffnet werden. Das Signal zur Erhöhung der Raum-Solltemperatur wird in diesem Fall (bei regenerativen Energien) vom Home Energy System oder von einem externen System übertragen.

### Bezugszeichenliste

- 2: Heizungsanlage
- 4: Wärmeerzeuger
- 6: Heizkreis
- 6a, 6b: Teilkreis
- 8: Vorlauf
- 10: Rücklauf
- 12: Verbraucher
- 14: Stellventil
- 16: Temperaturregler
- 17: Pufferspeicher
- 18: Umwälzpumpe
- 19: doppelt differenzdruckloser Verteiler
- 20: Sperrventil
- 21: Mischventil
- 22: Steuereinheit
- 24: Datenbus
- 26: Temperatursensor
- T_{Sn}: Soll-Temperatur
- Tₙ: Raumtemperatur

## Patentansprüche

1. Steuereinrichtung zur Raumtemperaturregelung eines Gebäudes mit mehreren Räumen mit
- einer zentralen Steuereinheit (22) zur Ermittlung einer Soll-Temperatur für einen zentralen Wärmeerzeuger (4) basierend auf einer Soll-Ist -Abweichung einer Raumtemperatur (Tₙ, Tₛₙ) eines Referenzraumes,
- mehreren Raumsensoren (16) zur Erfassung einer jeweiligen Raumtemperatur (Tₙ), in einem jeweiligen Raum, wobei die Raumsensoren (16) mit der Steuereinheit (22) datentechnisch in Verbindung stehen,
- wobei die Steuereinheit (22) für eine Ansteuerung von raumindividuellen Stellventilen (14) für raumindividuelle Heizkreise ausgebildet ist
**dadurch gekennzeichnet, dass**
- die Steuereinheit (22) derart ausgebildet ist, dass in Abhängigkeit von aktuellen Soll-Ist-Abweichungen verschiedener Räume die raumindividuellen Stellventile (14) derart angesteuert werden, dass Wärme aus überhitzten Räumen in kühlere Räume transportiert wird.

2. Steuereinrichtung nach dem vorhergehenden Anspruch, wobei die Steuereinheit (22) derart ausgebildet ist, dass das Stellventil (14) eines überhitzten Raumes geöffnet wird, so dass Wärme aus dem überhitzten Raum abgegeben wird.

3. Steuereinrichtung nach einem der vorhergehenden Ansprüche, wobei ein verbraucherseitiger Teil des Heizkreises (6) von einem erzeugerseitigen Teil des Heizkreises (6) zumindest teilweise trennbar ist.

4. Steuereinrichtung nach dem vorhergehenden Anspruch, wobei die Steuereinheit (22) derart ausgebildet ist, dass der verbraucherseitige Teil des Heizkreises (6) von dem erzeugerseitigen Teil des Heizkreises (6) getrennt wird, und dass eine Zirkulation eines Wärmeträgermediums lediglich zwischen den einzelnen Räumen erfolgt, so dass ein Wärmetransport vom überhitzten in den kühleren Raum ohne Einbindung des Wärmeerzeugers ermöglicht ist.

5. Steuereinrichtung nach einem der vorhergehenden Ansprüche, wobei die Steuereinheit (22) derart eingerichtet ist, dass für jeden der Räume eine aktuelle raumindividuelle Soll-Ist-Abweichung der Raumtemperatur (Tₙ) ermittelt und miteinander verglichen werden und in Abhängigkeit des Vergleichs einer der Räume als aktueller Referenzraum festgelegt wird.

6. Steuereinrichtung nach dem vorgehenden Anspruch, wobei der Raum mit der größten aktuellen Soll-Ist-Abweichung als aktueller Referenzraum festgelegt wird.

7. Steuereinrichtung nach einem der beiden vorgehenden Ansprüche, wobei die Bestimmung des Referenzraums in wiederkehrenden Zeitabständen erfolgt.

8. Steuereinrichtung nach einem der Ansprüche 5 bis 7, wobei als ein Raummesswert neben der Raumtemperatur zusätzlich die Raumfeuchte herangezogen wird.

9. Steuereinrichtung nach einem der Ansprüche 5 bis 8, wobei insbesondere im Falle eines Kühlbetriebs zur Kühlung eines Raumes raumindividuell eine Taupuntktemperatur bestimmt wird und der Raum mit der höchsten Taupunkttemperatur als aktueller Referenzraum festgelegt wird.

10. Steuereinrichtung nach einem der vorgehenden Ansprüche, die in ein Home-Energy-System oder in ein Smart-Grid-System eingebunden ist.

11. Steuereinrichtung nach dem vorhergehenden Anspruch, die derart ausgebildet ist, dass insbesondere bei im Überschuss vorhandener Energie die Raum-Solltemperatur angehoben wird, so dass das Gebäude als ein Energiespeicher verwendet ist.

12. Steuereinrichtung nach einem der vorgehenden Ansprüche, wobei die Steuereinheit (22) in eine Regeleinrichtung des Wärmeerzeugers (4) integriert ist.

13. Steuereinrichtung nach einem der vorhergehenden Ansprüche, wobei eine Schnellheizfunktion implementiert ist, bei dessen Aktivierung die Solltemperatur auf einen maximalen Wert eingestellt wird.

14. Anlage (2) mit einer eine Steuereinheit (22) aufweisenden Steuereinrichtung nach einem der vorhergehenden Ansprüche mit einem zentralen Wärmeerzeuger (4) sowie mit zumindest einem Heizkreis (6) zur Versorgung von mehreren in verschiedenen Räumen angeordneten raumindividuellen Verbrauchern (6) mit einem Wärmeträgermedium.

15. Anlage nach Anspruch 14, mit einem Kühlsystem, insbesondere Flächenkühlsystem, welches passiv oder aktiv ausgebildet ist.

## Claims

1. Control installation for the closed-loop controlling of the room temperature of a building having a plurality of rooms, having
- a central control unit (22) for determining a nominal temperature for a central heat generator (4), based on a nominal/actual variance of a room temperature (Tₙ, Tₛₙ) of a reference room;
- a plurality of room sensors (16) for detecting a respective room temperature (Tₙ) in a respective room, wherein the room sensors (16) in terms of data technology are connected to the control unit (22);
- wherein the control unit (22) is configured for actuating actuator vales (14) of individual rooms for heating circuits of individual rooms,
**characterized in that**
- the control unit (22) is configured in such a manner that the actuator valves (14) of individual rooms as a function of current nominal/actual variances of different rooms are actuated in such a manner that heat is transported from overheated rooms to cooler rooms.

2. Control installation according to the preceding claim, wherein the control unit (22) is configured in such a manner that the actuator valve (14) of an overheated room is opened such that heat is dispensed from the overheated room.

3. Control installation according to one of the preceding claims, wherein a consuming part of the heating circuit (6) is capable of being at least partially separated from a generating part of the heating circuit (6).

4. Control installation according to the preceding claim, wherein the control unit (22) is configured in such a manner that the consuming part of the heating circuit (6) is separated from the generating part of the heating circuit (6), and in that a circulation of a heat transfer medium takes place only between the individual rooms such that heat can be transported from the overheated room to the cooler room without including the heat generator.

5. Control installation according to one of the preceding claims, wherein the control unit (22) is specified in such a manner that a current nominal/actual variance of the room temperature (Tₙ) for the individual room is determined for each of the rooms, and said nominal/actual variances are compared with one another, and as a function of the comparison one of the rooms is established as the current reference room.

6. Control installation according to the preceding claim, wherein the room with the highest current nominal/actual variance is established as the current reference room.

7. Control installation according to one of the two preceding claims, wherein the determination of the reference room takes place at recurring temporal intervals.

8. Control installation according to one of Claims 5 to 7, wherein, besides the room temperature, the room humidity is additionally used a room measurement value.

9. Control installation according to one of Claims 5 to 8, wherein, in particular in the case of a cooling operation for cooling a room, a dew-point temperature is determined for each individual room, and the room with the highest dew-point temperature is established as the current reference room.

10. Control installation according to one of the preceding claims, said control installation being a home energy system or being included in a smart grid system.

11. Control installation according to the preceding claim, said control installation being configured in such a manner that the nominal room temperature is increased, in particular in the case of excessive available energy, such that the building is used as an energy accumulator.

12. Control installation according to one of the preceding claims, wherein the control unit (22) is integrated in a closed-loop control installation of the heat generator (4).

13. Control installation according to one of the preceding claims, wherein a rapid heating function is implemented, the nominal temperature being set to a maximum value when said rapid heating function is activated.

14. Facility (2) having a control installation according to one of the preceding claims, having a control unit (22), having a central heat generator (4) as well as at least one heating circuit (6) for supplying a heat transfer medium to a plurality of consumers (6) that are disposed individually in different rooms.

15. Facility according to Claim 14, having a cooling system, in particular a surface cooling system, which is configured so as to be passive or active.

## Revendications

1. Dispositif de commande destiné à la régulation de la température ambiante d'un bâtiment ayant plusieurs pièces, comprenant
- une unité de commande centrale (22) destinée à déterminer une température de consigne pour un générateur de chaleur central (4) sur la base d'un écart consigne-réel d'une température ambiante (Tₙ, Tₛₙ) d'une pièce de référence,
- plusieurs sondes d'ambiance (16) destinées à détecter une température ambiante (Tₙ) respective dans une pièce respective, les sondes d'ambiance (16) se trouvant en liaison informatique avec l'unité de commande (22),
- l'unité de commande (22) étant configurée pour un pilotage de vannes de réglage (14) individuelles par pièce pour des circuits de chauffage individuels par pièce
**caractérisé en ce que**
- l'unité de commande (22) est configurée de telle sorte que les vannes de réglage (14) individuelles par pièce sont pilotées en fonction des écarts consigne-réel actuels des différentes pièces de telle sorte que de la chaleur issue des pièces surchauffées est transportée dans les pièces plus fraîches.

2. Dispositif de commande selon la revendication précédente, l'unité de commande (22) étant configurée de telle sorte que la vanne de réglage (14) d'une pièce surchauffée est ouverte, de sorte que de la chaleur est dégagée hors de la pièce surchauffée.

3. Dispositif de commande selon l'une des revendications précédentes, une partie côté récepteur du circuit de chauffage (6) pouvant être séparée au moins partiellement d'une partie côté générateur du circuit de chauffage (6).

4. Dispositif de commande selon la revendication précédente, l'unité de commande (22) étant configurée de telle sorte que la partie côté récepteur du circuit de chauffage (6) est séparée de la partie côté générateur du circuit de chauffage (6) et qu'une circulation d'un fluide caloporteur a uniquement lieu entre les pièces individuelles, de sorte qu'un transport de chaleur de la pièce surchauffée vers la pièce plus fraîche est rendu possible sans intervention du générateur de chaleur.

5. Dispositif de commande selon l'une des revendications précédentes, l'unité de commande (22) étant configurée de telle sorte que pour chacune des pièces, un écart consigne-réel actuel individuel d'une pièce de la température ambiante (Tₙ) est déterminé, puis les écarts sont comparés entre eux et l'une des pièces est déterminée en tant que pièce de référence actuelle en fonction de la comparaison.

6. Dispositif de commande selon la revendication précédente, la pièce ayant l'écart consigne-réel actuel le plus élevé étant déterminée en tant que pièce de référence actuelle.

7. Dispositif de commande selon l'une des deux revendications précédentes, la définition de la pièce de référence étant effectuée à des intervalles de temps récurrents.

8. Dispositif de commande selon l'une des revendications 5 à 7, en plus de la température ambiante, l'humidité ambiante étant utilisée en complément comme valeur mesurée de la pièce.

9. Dispositif de commande selon l'une des revendications 5 à 8, une température de point de rosée étant définie individuellement pour une pièce, notamment dans le cas d'un fonctionnement en refroidissement destiné au rafraîchissement d'une pièce, et la pièce ayant la température de point de rosée la plus élevée étant déterminée en tant que pièce de référence actuelle.

10. Dispositif de commande selon l'une des revendications précédentes, lequel est intégré dans un système d'énergie résidentiel ou dans un système de réseau de distribution d'énergie intelligent.

11. Dispositif de commande selon la revendication précédente, lequel est configuré de telle sorte que la température de consigne ambiante est relevée, notamment dans le cas d'énergie présente en excès, de sorte que le bâtiment est utilisé comme un accumulateur d'énergie.

12. Dispositif de commande selon l'une des revendications précédentes, l'unité de commande (22) étant intégrée dans un dispositif de régulation du générateur de chaleur (4).

13. Dispositif de commande selon l'une des revendications précédentes, une fonction de chauffage rapide étant mise en œuvre, lors de l'activation de laquelle la température de consigne est réglée à une valeur maximale.

14. Installation (2) comprenant un dispositif de commande selon l'une des revendications précédentes possédant une unité de commande (22), comprenant un générateur de chaleur central (4) et comprenant aussi au moins un circuit de chauffage (6) destiné à alimenter avec un fluide caloporteur plusieurs récepteurs (6) individuels par pièce disposés dans différentes pièces.

15. Installation selon la revendication 14, comprenant un système de refroidissement, notamment un système de refroidissement de surface, qui est de configuration passive ou active.
